# FASCICULE DE BREVET EUROPEEN

(11) **EP 4 251 893 B1**
(45) Date de publication et mention de la délivrance du brevet: **18.09.2024**
(21) Numéro de dépôt: 21811336.3
(22) Date de dépôt: 15.11.2021
(51) Int. Cl.: F16C 35/067, F16C 35/02, F16C 35/04, B64C 13/04, G05G 9/047

(54) **DISPOSITIF DE GUIDAGE À SURETÉ RENFORÉE**
AUSFALLSICHERE FÜHRUNGSVORRICHTUNG
FAIL-SAFE GUIDE DEVICE

(30) Priorité: 26.11.2020 FR 2012202
(43) Date de publication de la demande: 04.10.2023
(73) Titulaire: SAFRAN, 75015 Paris (FR); Safran Electronics & Defense, 75015 Paris (FR)
(72) Inventeur: LAWNICZAK, Rémi-Louis, 77550 MOISSY-CRAMAYEL (FR); LAURENSAN, Frédéric, 77550 MOISSY-CRAMAYEL (FR); CARTRY, Thierry, 77550 MOISSY-CRAMAYEL (FR); BETBEDER-LAÜQUE, Xavier, 77550 MOISSY-CRAMAYEL (FR)
(74) Mandataire: Cabinet Boettcher
(86) Numéro de dépôt international: PCT/EP2021/081742
(87) Numéro de publication internationale: WO 2022/112046

(56) Documents cités:
- WO-A1-2020/225305
- FR-A1- 3 011 815
- FR-A1- 3 086 273

## Description

La présente invention concerne le domaine des dispositifs de liaison en rotation.

### ARRIERE PLAN DE L'INVENTION

Il est connu de la demande de brevet FR-A-3011815, un dispositif de commande de vol d'un aéronef comprenant un bâti sur lequel un cadre est monté à rotation selon un premier axe. Un bras de commande destiné à être relié à une poignée de contrôle est monté à rotation sur le cadre et comprend un croisillon de tangage monté à rotation sur le bras de commande. Un croisillon de roulis monté à rotation sur le cadre est relié à un arbre de roulis monté à rotation sur le croisillon de roulis. L'arbre de roulis est relié à un moteur de roulis. Un moteur de tangage comprend un arbre de tangage monté à rotation sur le croisillon de tangage. Les moteurs de tangage et de roulis assurent un retour haptique à l'utilisateur du dispositif de commande de vol et une mesure des commandes (roulis et tangage) appliqués par l'utilisateur à la poignée de contrôle. Un tel dispositif de commande met en œuvre six dispositifs de liaison en rotation. Généralement, la liaison en rotation est assurée par un arbre d'un élément male monté à rotation relativement à un logement d'un élément femelle à l'aide d'un roulement reçu dans un logement de l'élément femelle.

En cas de rupture (apparition de fissure/crique ou fracture) de l'élément mâle et/ou de l'élément femelle, le roulement peut s'échapper de son logement ou s'y coincer et ainsi provoquer la perte totale ou partielle de la fonction de commande. Cette perte pouvant aboutir à une situation catastrophique, il existe un besoin de prémunir les liaisons en rotation d'un tel dispositif de commande contre les ruptures des éléments mâle et femelle.

### OBJET DE L'INVENTION

L'invention a notamment pour but de préserver une fonction de guidage en rotation entre un élément mâle et un élément femelle dans le cas d'une rupture de l'un des éléments.

Dans une application à un dispositif de commande de vol, l'invention a pour but de garantir que les fonctions de retour haptique et de mesure de déplacement d'une poignée de contrôle reliée au dispositif de commande de vol soit conservées malgré la rupture d'un des éléments du dispositif de commande de vol.

### RESUME DE L'INVENTION

A cet effet, on prévoit, un dispositif de liaison en rotation comprenant un élément femelle et un élément mâle monté dans l'élément femelle à rotation autour d'un premier axe via un palier de guidage en rotation. Selon l'invention, chaque élément comprend deux pièces agencées pour porter toutes deux le palier de manière à maintenir le palier en position indépendamment d'une rupture de l'une des pièces du même élément.

Ainsi, une rupture de l'un des éléments ne provoque pas la perte du guidage en rotation.

Au sens de la présente demande, un palier est porté par une pièce lorsque la pièce assure un positionnement fixe du palier par rapport à ladite pièce et qu'elle reprend les composantes, normales à l'axe de rotation du palier, des efforts appliqués au palier.

Avantageusement, l'élément femelle comprend une première pièce d'élément femelle et une deuxième pièce d'élément femelle, et le palier comprend des premiers moyens de fixation à la première pièce d'élément femelle et des deuxièmes moyens de fixation à la deuxième pièce d'élément femelle.

On obtient une réalisation particulièrement économique lorsque les premiers moyens de fixation et/ou les deuxièmes moyens de fixation comprennent une oreille venant en saillie d'une surface externe du palier de guidage.

La liaison du palier aux éléments est facilitée lorsque l'oreille comprend au moins un perçage.

Selon un premier mode de réalisation particulier de l'élément femelle, l'élément femelle comprend un premier logement d'accueil du palier, défini conjointement par la première pièce d'élément femelle et par la deuxième pièce d'élément femelle, la première pièce d'élément femelle définissant un premier secteur du premier logement centré autour du premier axe et la deuxième pièce d'élément femelle définissant un deuxième secteur du premier logement centré autour du premier axe. Il est possible de réaliser des éléments symétriques lorsque le premier secteur a une première amplitude sensiblement égale à cent quatre-vingt degrés et le deuxième secteur a une deuxième amplitude sensiblement égale à cent quatre-vingt degrés.

Selon un deuxième mode de réalisation particulier de l'élément femelle, l'élément femelle comprend un premier logement d'accueil du palier, défini conjointement par une première pièce d'élément femelle définissant une première portion de premier logement et par une deuxième pièce d'élément femelle définissant une deuxième portion de premier logement, la première portion de premier logement et la deuxième portion de premier logement s'étendant de part et d'autre d'un premier plan orthogonal au premier axe.

Il est possible de simplifier la fabrication et le montage lorsque la deuxième pièce d'élément femelle comprend une première demi-coquille et une deuxième demi-coquille assemblées l'une à l'autre.

Selon un troisième mode de réalisation particulier de l'élément femelle, l'élément femelle comprend une première pièce d'élément femelle définissant un premier logement d'accueil du palier et une deuxième pièce d'élément femelle définissant un deuxième logement d'accueil de la première pièce d'élément femelle.

Selon un premier mode de réalisation particulier de l'élément mâle, l'élément mâle comprend une première pièce d'élément mâle et une deuxième pièce d'élément mâle pourvues des troisièmes moyens de leur liaison en rotation autour du premier axe.

Le dispositif est très compact lorsque la première pièce d'élément mâle comprend une première lumière au travers de laquelle s'étend au moins partiellement la deuxième pièce d'élément mâle

La transmission des efforts est particulièrement efficace lorsque la première lumière s'étend selon une direction sensiblement parallèle au premier axe et/ou la première pièce d'élément mâle comprend également une deuxième lumière qui s'étend selon une direction sensiblement orthogonale au premier axe et au travers de laquelle s'étend au moins partiellement la deuxième pièce d'élément mâle.

Selon un deuxième mode de réalisation particulier de l'élément mâle, l'élément mâle comprend une première pièce d'élément mâle emboîtée dans une deuxième pièce d'élément mâle.

Avantageusement, l'élément mâle comprend un deuxième dispositif de liaison en rotation autour d'un deuxième axe. Un tel dispositif trouve une application particulièrement intéressante lorsque le deuxième dispositif de liaison en rotation autour d'un deuxième axe est conforme à l'un des dispositifs décrits ci-dessus.

L'invention concerne également un dispositif de commande de vol d'un aéronef, comprenant un bâti, un cadre monté à rotation relativement au bâti autour d'un premier axe principal
et un bras de commande destiné à être relié à une interface de manipulation manuelle et monté à rotation sur le cadre à l'aide d'un premier dispositif de liaison en rotation. Un croisillon de roulis est monté à rotation sur le cadre à l'aide d'un deuxième dispositif de liaison en rotation. Un croisillon de tangage est monté à rotation sur le bras de commande à l'aide d'un troisième dispositif de liaison en rotation. Un moteur de roulis est monté fixe par rapport au cadre et comprend un arbre de roulis monté à rotation sur le croisillon de roulis à l'aide d'un quatrième dispositif de liaison en rotation. Un moteur de tangage est monté fixe par rapport au cadre et comprend un arbre de tangage monté à rotation sur le croisillon de tangage à l'aide d'un cinquième dispositif de liaison en rotation. Selon l'invention, les premier à cinquième dispositifs de guidage en rotation sont conformes à l'un de ceux décrits précédemment.

D'autres caractéristiques et avantages de l'invention ressortiront à la lecture de la description qui suit d'un mode de réalisation particulier de l'invention.

### BREVE DESCRIPTION DES DESSINS

Il sera fait référence aux dessins annexés, parmi lesquels :
[Fig. 1]la figure 1 est une vue schématique en perspective d'un dispositif de commande selon l'invention, dont le bâti est représenté transparent ;
[Fig. 2] la figure 2 est une vue schématique en perspective d'un cadre du dispositif selon l'invention ;
[Fig. 3] la figure 3 est une vue schématique partielle en perspective de la figure 2 selon un autre angle de vue ; [Fig. 4] la figure 4 est une vue schématique en perspective d'un bras de commande du dispositif selon l'invention ; [Fig. 5] la figure 5 est une vue schématique éclatée en perspective du bras de commande de la figure 4 ;
[Fig. 6] la figure 6 est une vue schématique en perspective d'un croisillon de tangage du dispositif selon l'invention ;
[Fig. 7] la figure 7 est une vue schématique éclatée en perspective du croisillon de tangage de la figure 6 ; [Fig. 8] la figure 8 est une vue schématique en perspective d'un arbre de tangage du dispositif selon l'invention ; [Fig. 9] la figure 9 est une vue schématique éclatée en perspective de l'arbre de tangage de la figure 8 ;

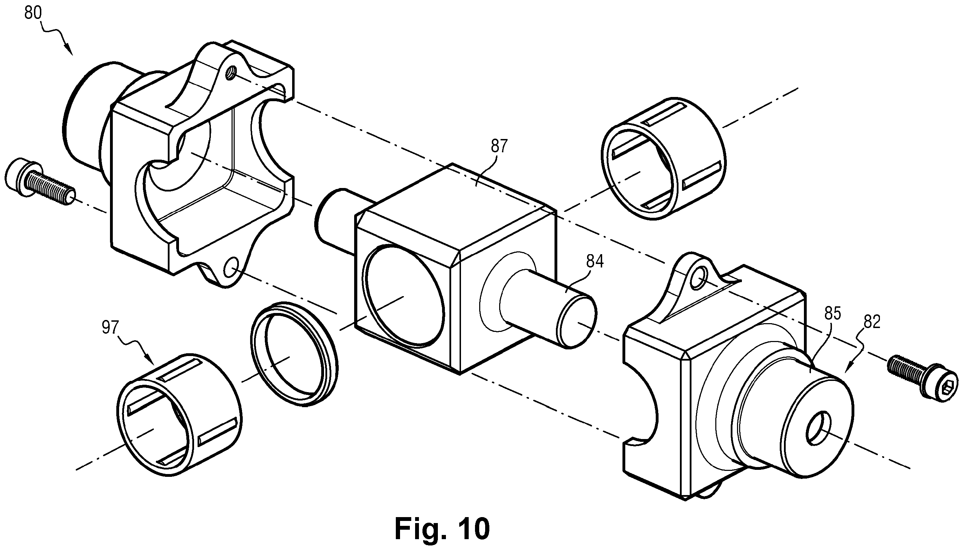

[Fig. 10] la figure 10 est une vue schématique éclatée en perspective d'un croisillon de roulis du dispositif selon l'invention ;

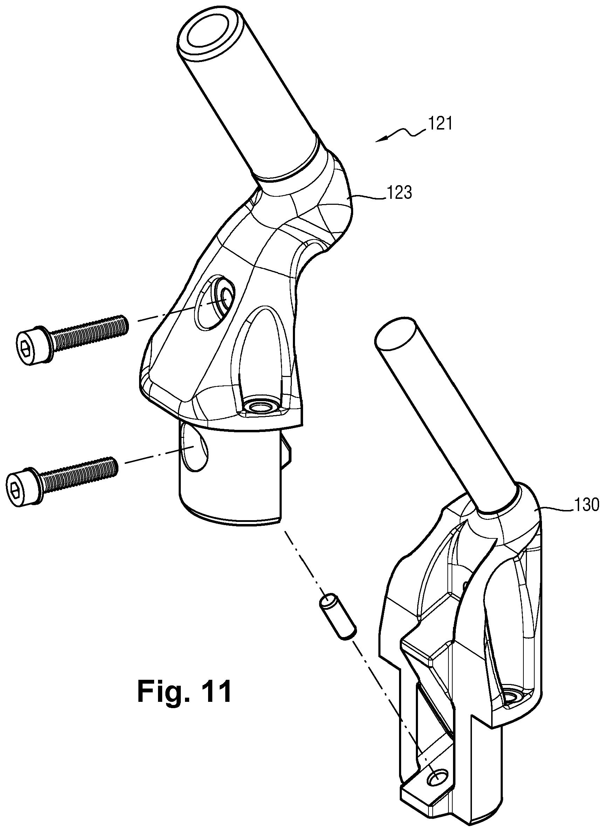

[Fig. 11] la figure 11 est une vue schématique éclatée en perspective d'un arbre de roulis du dispositif selon l'invention ;
[Fig. 12] la figure 12 est une vue schématique en coupe d'un arbre d'articulation du cadre sur le bâti ;
[Fig. 13] la figure 13 est une vue schématique en coupe d'un autre arbre d'articulation du cadre sur le bâti.

### DESCRIPTION DETAILLEE DE L'INVENTION

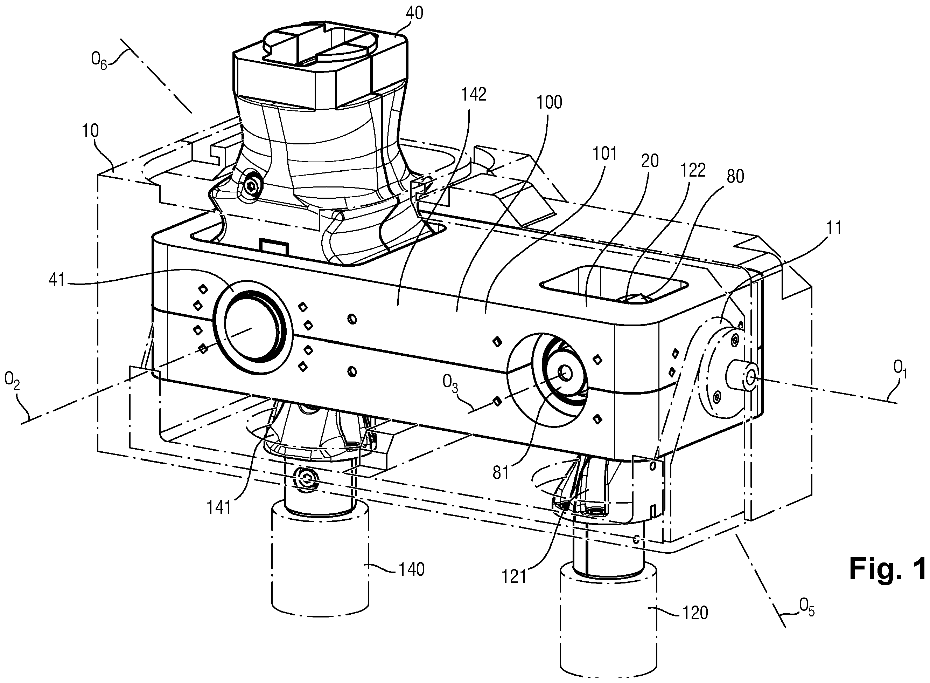

En référence à la figure 1, le dispositif de commande de vol selon l'invention, et généralement désigné 1 comprend :
- un bâti 10,
- un cadre 20 monté à rotation relativement au bâti 10 autour d'un premier axe O1 à l'aide d'un premier dispositif de liaison en rotation 11 ;
- un bras de commande 40 monté à rotation sur le cadre 20 autour d'un deuxième axe de rotation 02 à l'aide d'un deuxième dispositif de liaison en rotation 41 ;
- un croisillon de roulis 80 monté à rotation autour d'un troisième axe de rotation 03 sur le cadre 20 à l'aide d'un troisième dispositif de liaison en rotation 81 ;
- un croisillon de tangage 100 monté à rotation autour d'un quatrième axe de rotation O4 sur le bras de commande 40 à l'aide d'un quatrième dispositif de liaison en rotation 101;
- un moteur de roulis 120 solidaire du bâti 10 et qui comprend un arbre de roulis 121 monté à rotation autour d'un cinquième axe de rotation O5 sur le croisillon de roulis 80 à l'aide d'un cinquième dispositif de liaison en rotation 122.
- un moteur de tangage 140 solidaire du bâti et qui comprend un arbre de tangage 141 monté à rotation autour d'un sixième axe de rotation O6 sur le croisillon de tangage 100 à l'aide d'un sixième dispositif de liaison en rotation 142.

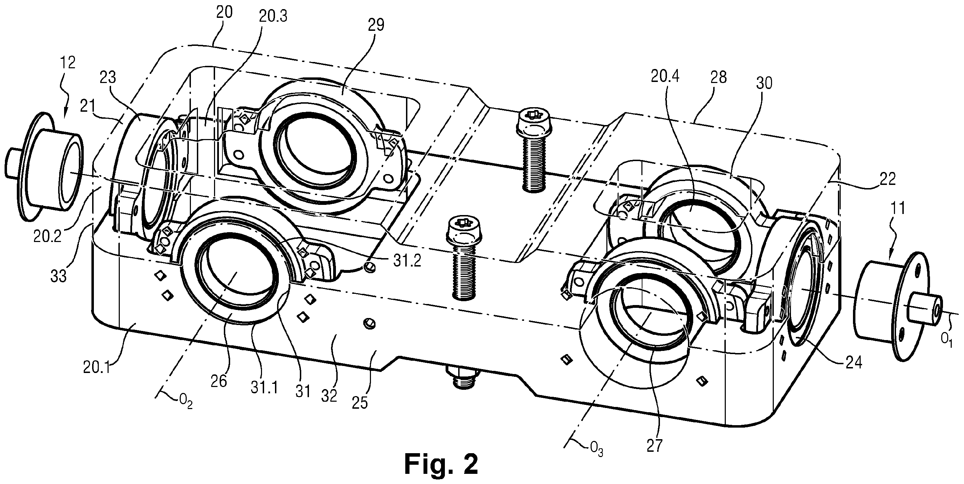

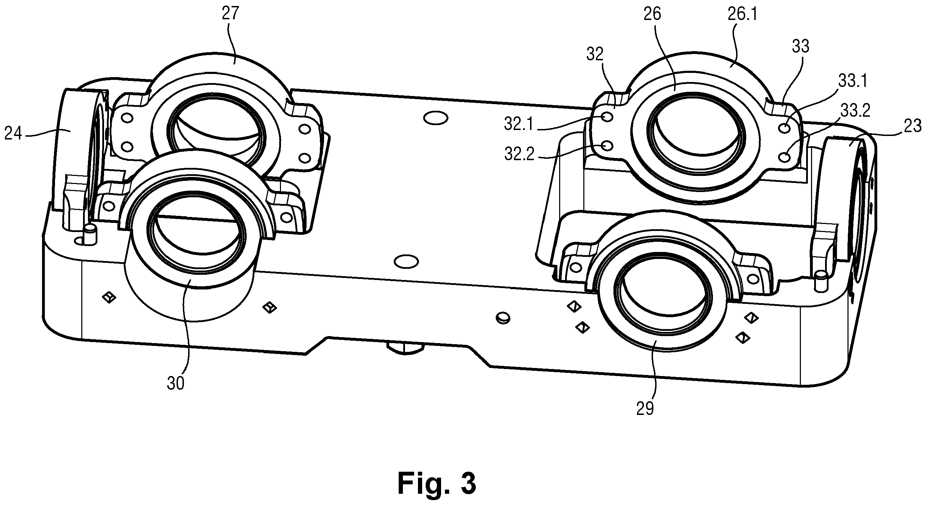

En référence aux figures 2 à 4, le cadre 20 est de forme sensiblement parallélépipédique et comprend deux petites faces 21 et 22 qui portent respectivement un premier palier 23 - ici un roulement à billes - et un deuxième palier 24 - ici un roulement à billes - pour l'articulation du cadre 20 autour du premier axe O1. La première grande face 25 comprend un troisième palier 26 et un quatrième palier 27. La deuxième grande face 28 comprend un cinquième palier 29 et un sixième palier 30. Le cadre 20 comprend une première pièce 20.1 et une deuxième pièce 20.2, ici un premier demi-cadre 20.1 et un deuxième demi-cadre 20.2, assemblés le long d'un plan de joint contenant les axes O2 et O3 et reliés l'un à l'autre par boulonnage. Comme visible en figure 2, le troisième palier 26 est accueilli dans un premier logement 31 cylindrique du cadre 20. Le premier logement 31 est défini conjointement par le premier demi-cadre 20.1 et par le deuxième demi-cadre 20.2. Le premier demi-cadre 20.1 définit un premier secteur 31.1 du premier logement 31 centré autour du deuxième axe O2 et le deuxième demi-cadre 20.2 définit un deuxième secteur 31.2 du premier logement 31 centré autour du premier axe. Le premier secteur 31.1 et le deuxième secteur 31.2 ont tous deux, ici, une amplitude de cent-quatre-vingt degrés et sont ouverts sur le plan de joint.

Le troisième palier 26 comprend une bague extérieure pourvue d'une première oreille 32 et d'une deuxième oreille 33 venant en saillie de la bague extérieure 26.1. Ici, la première oreille 32 et la deuxième oreille 33 sont diamétralement opposées et respectivement reçues dans des entailles réalisées dans le cadre 20 à cheval sur le premier demi-cadre 20.1 et le deuxième demi-cadre 20.2 pour déboucher dans le premier logement 31. La première oreille 32 comprend un premier perçage 32.1 et un deuxième perçage 32.2 qui accueillent respectivement une première vis de fixation au premier demi-cadre 20.1 et une deuxième vis de fixation au deuxième demi-cadre 20.2 (non représentées). De manière homologue, la deuxième oreille 33 comprend un troisième perçage 33.1 et un quatrième perçage 33.2 qui accueillent respectivement une troisième vis de fixation au premier demi-cadre 20.1 et une quatrième vis de fixation au deuxième demi-cadre 20.2 (non représentées).

Ainsi, le troisième palier 26 est porté par le premier demi-cadre 20.1 via la première et la troisième vis, et par le deuxième demi-cadre 20.2 via la deuxième et la quatrième vis. Dans le cas d'une rupture du premier demi-cadre 20.1, le troisième palier 26 est porté par le deuxième demi-cadre 20.2 et la fonction de guidage en rotation autour du deuxième axe O2 par le troisième palier 26 est conservée.

Le premier palier 23, le deuxième palier 24, le quatrième palier 27, le cinquième palier 29 et le sixième palier 30 sont reliés au cadre 20 selon des dispositions similaires à celles décrites pour le troisième palier 26.

Ainsi, le cadre 20 comprend deux pièces, le premier demi-cadre 20.1 et le deuxième demi-cadre 20.2, qui sont agencées pour porter toutes deux les paliers 23, 24, 26, 27, 29 et 30 de manière à maintenir ces paliers en position indépendamment de la rupture de l'un des demi-cadres 20.1 ou 20.2.

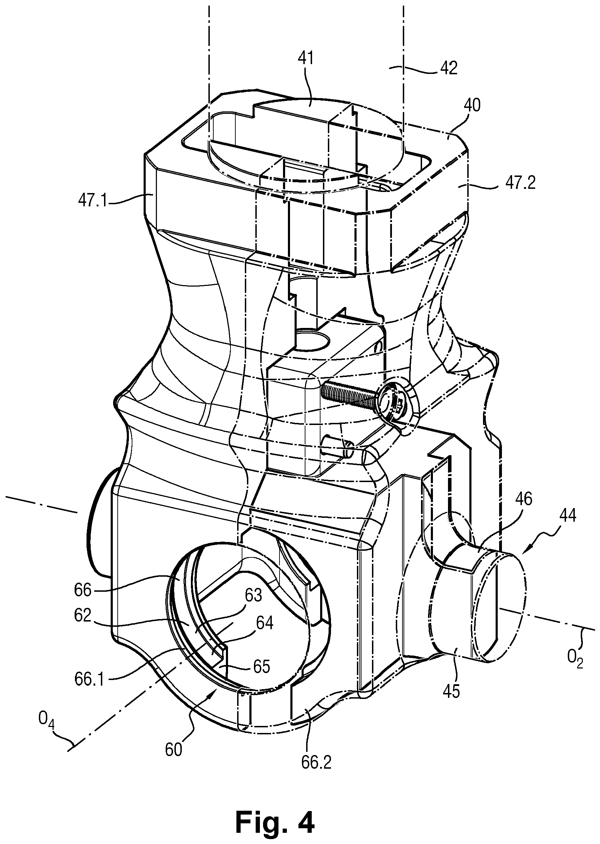

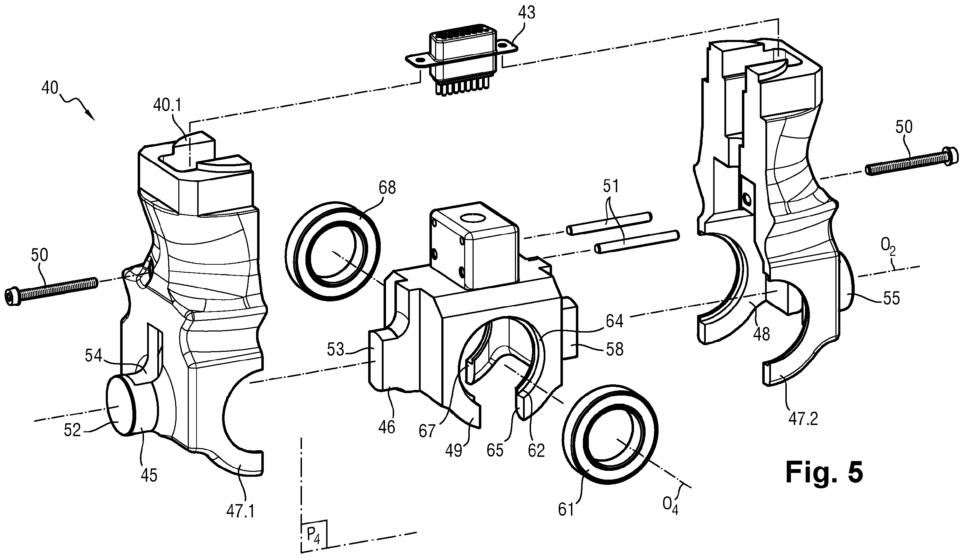

En référence aux figures 4 et 5, le bras de commande 40 comprend une platine 40.1 de réception d'une poignée 42 de commande. La platine 40.1 comprend des moyens de la liaison mécanique et électronique (ici un connecteur 43) de la poignée 42 au bras de commande 40.

Le bras de commande 40 présente un élément mâle, ici un premier arbre 44, qui est reçu dans le troisième palier 26.

Le premier arbre 44 comprend deux pièces d'éléments mâle, à savoir une première pièce d'élément mâle 45 et une deuxième pièce d'élément mâle 46.

Comme particulièrement visible en figure 5, le bras de commande 40 comprend une première demi-coquille 47.1 et une deuxième demi-coquille 47.2 qui définissent conjointement un deuxième logement interne 48 sensiblement cubique de réception d'un premier noyau 49.

La première demi-coquille 47.1 et la deuxième demi-coquille 47.2 sont reliées l'une à l'autre à l'aide de vis 50 qui traversent également le premier noyau 49. Deux pions de cisaillement 51 assurent également une liaison entre la première demi-coquille 47.1, la deuxième demi-coquille 47.2 et le premier noyau 49. Ainsi, le premier noyau 49 est solidaire en rotation autour du deuxième axe O2 de la première demi-coquille 47.1 et de la deuxième demi-coquille 47.2.

La première pièce d'élément mâle 45 est définie par la première demi-coquille 47.1 et comprend une première lumière 52 sensiblement coaxiale au deuxième axe O2 et au travers de laquelle s'étend la deuxième pièce d'élément mâle 46 qui est définie par une première protrusion 53 du premier noyau 49.

La première pièce d'élément mâle 45 comprend également une deuxième lumière 54 qui s'étend selon une direction sensiblement orthogonale au deuxième axe O2. La première protrusion 53 s'étend également au travers de la deuxième lumière 54.

Le bras de commande 40 présente un autre élément mâle, ici un deuxième arbre 55, qui est reçu dans le cinquième palier 29. Le deuxième arbre 55 comprend, de manière homologue au premier arbre 44, deux pièces d'éléments mâle, à savoir une troisième pièce d'élément mâle 56 et une quatrième pièce d'élément mâle 57 respectivement définies par la deuxième demi-coquille 47.2 et une deuxième protrusion 58 du premier noyau 49.

Ainsi, le bras de commande 40 comprend deux pièces, la demi-coquille 47.1 et le premier noyau 49, qui sont agencées pour porter toutes deux le troisième palier 26 de manière à maintenir le troisième palier 26 en position indépendamment de la rupture de la première demi-coquille 47.1 ou du premier noyau 49.

Le premier arbre 44, le deuxième arbre 55, le troisième palier 26 et le cinquième palier 29 définissent le deuxième dispositif de liaison en rotation 41. Plus précisément, le premier arbre 44 et le deuxième arbre 55 du bras de commande 40 définissent un élément mâle du deuxième dispositif de liaison en rotation 41. Le premier logement 31 du troisième palier 26 et le logement du cinquième palier 29 du cadre 20 définissent un élément femelle du deuxième dispositif de liaison en rotation 41.

En référence aux figures 4 et 5, le bras de commande 40 comprend un troisième logement 60 d'accueil d'un septième palier 61 - ici un roulement à billes - pour guider une rotation autour du quatrième axe O4.

Le troisième logement 60 est défini conjointement par une première portion 62 de troisième logement 60 et une deuxième portion 63 de troisième logement 60. La première portion 62 de troisième logement 60 et la deuxième portion 63 de troisième logement 60 s'étendent de part et d'autre d'un premier plan P4 orthogonal au quatrième axe O4. La première portion 62 correspond à un premier lamage 64 réalisé dans le premier noyau 49 et qui comprend une découpure 65 radiale. La deuxième portion 63 correspond à un deuxième lamage 66 composé d'un premier demi-lamage 66.1 réalisé dans la première demi-coquille 47.1 et d'un deuxième demi-lamage 66.2 réalisé dans la deuxième demi-coquille 47.2.

Ainsi, le bras de commande 40 comprend deux pièces, les demi-coquilles 47.1 et 47.2 d'une part et le premier noyau 49 d'autre part, qui sont agencées pour porter toutes deux le septième palier 61 de manière à maintenir le septième palier 61 en position indépendamment de la rupture des demi-coquilles 47.1 et 47.2 ou du premier noyau 49.

Le bras de commande 40 comprend également un quatrième logement 67 d'accueil d'un huitième palier 68 - ici un roulement à billes - pour guider une rotation autour du quatrième axe O4. Le quatrième logement 67 est symétrique au troisième logement 60 et conçu de la même manière.

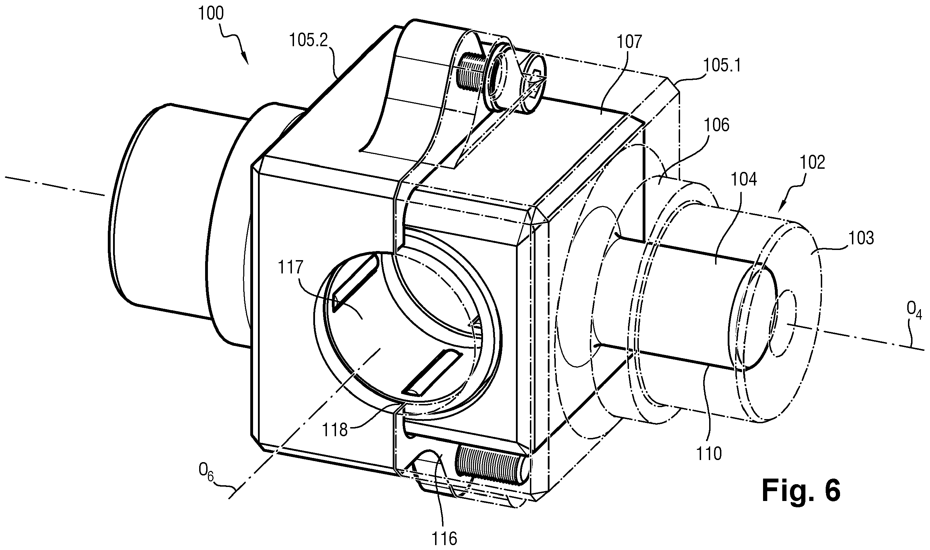

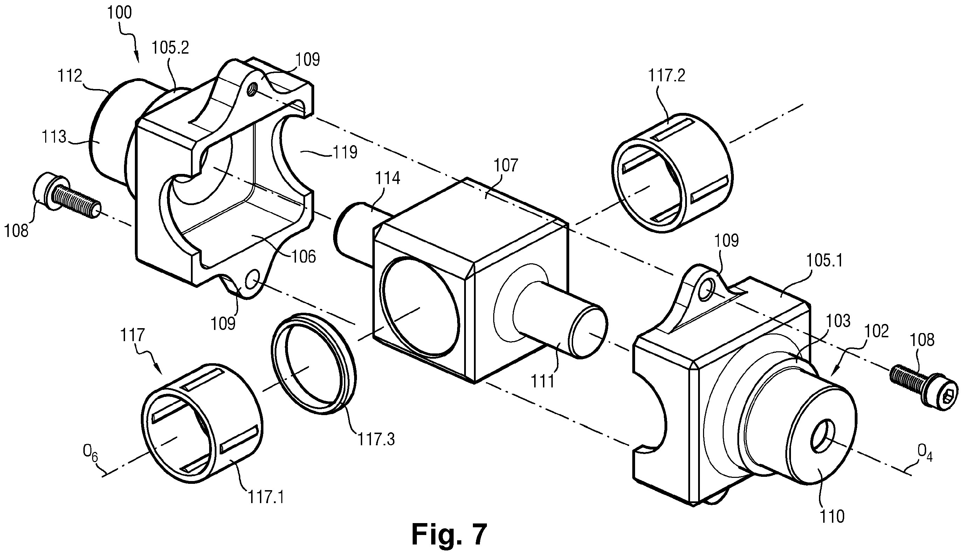

En référence aux figures 6 et 7, le croisillon de tangage 100 comprend un élément mâle, ici un troisième arbre 102, qui est reçu dans le septième palier 61 et s'étend selon le quatrième axe O4.

Le troisième arbre 102 comprend deux pièces d'éléments mâle, à savoir une cinquième pièce d'élément mâle 103 et une sixième pièce d'élément mâle 104.

Le croisillon de tangage 100 comprend une troisième demi-coquille 105.1 et une quatrième demi-coquille 105.2 qui définissent conjointement un cinquième logement interne 106 sensiblement cubique de réception d'un deuxième noyau 107.

La troisième demi-coquille 105.1 et la quatrième demi-coquille 105.2 sont reliées l'une à l'autre à l'aide de vis 108 engagées dans des brides 109 solidaires des demi-coquilles 105.1 et 105.2. Ainsi, le deuxième noyau 107 est solidaire en rotation autour du quatrième axe O4 de la troisième demi-coquille 105.1 et de la quatrième demi-coquille 105.2.

La cinquième pièce d'élément mâle 103 est définie par la troisième demi-coquille 105.1 et comprend une troisième lumière 110 sensiblement coaxiale au quatrième axe O4 et dans laquelle s'étend la sixième pièce d'élément mâle 104 qui est définie par une troisième protrusion 111 du deuxième noyau 107.

Le croisillon de tangage 100 présente un autre élément mâle, ici un quatrième arbre 112, qui est reçu dans le huitième palier 68. Le quatrième arbre 112 comprend, de manière homologue au troisième arbre 102, une septième pièce d'élément mâle 113 et une huitième pièce d'élément mâle 114 respectivement définies par la quatrième demi-coquille 105.2 et une quatrième protrusion 115 du deuxième noyau 107 de manière similaire à la cinquième pièce d'élément mâle 103 et la sixième pièce d'élément mâle 104. Ainsi, le croisillon de tangage 100 comprend deux pièces, une troisième demi-coquille 105.1 et un deuxième noyau 107, qui sont agencées pour porter toutes deux le septième palier 61 de manière à maintenir le septième palier 61 en position indépendamment de la rupture de la troisième demi-coquille 105.1 ou du deuxième noyau 107.

Le troisième arbre 102, le quatrième arbre 112, le septième palier 61 et le huitième palier 68 définissent le quatrième dispositif de liaison en rotation 101.

Plus précisément, le troisième arbre 102 et le quatrième arbre 112 du croisillon de tangage 100 définissent un élément mâle du quatrième dispositif de liaison en rotation 101. Le troisième logement 60 et le quatrième logement 67 du bras de commande 40 définissent un élément femelle du quatrième dispositif de liaison en rotation 101.

Ainsi, les pièces (demi-coquilles 45.1 et 45.2 et le premier noyau 49) constituant l'élément mâle du deuxième dispositif de liaison en rotation 41 reliant le bras de commande 40 au cadre 20 comprennent également un élément femelle du quatrième dispositif de liaison en rotation 101 reliant le bras de commande 40 au croisillon de tangage 100.

Toujours en référence aux figures 6 et 7, le croisillon de tangage 100 comprend un cinquième logement 116 d'accueil d'un neuvième palier 117 pour guider une rotation autour du sixième axe O6. Le neuvième palier 117 comprend un premier demi-palier 117.1 et un deuxième demi-palier 117.2 qui sont formés ici par deux roulements à rouleaux, tous deux identiques, séparés par un entretoise 117.3.

Le cinquième logement 116 s'étend dans le deuxième noyau 107. La troisième demi-coquille 105.1 et la quatrième demi-coquille 105.2 comprennent chacune deux ouvertures en demi-cercle qui définissent une première ouverture 118 circulaire et une deuxième ouverture 119 circulaire. Le diamètre intérieur de la première ouverture 118 est supérieur ou égal au diamètre intérieur du palier 117 et inférieur au diamètre extérieur du palier 117. Ainsi, la troisième demi-coquille 105.1 et la quatrième demi-coquille 105.2 empêchent une translation du neuvième palier 117 dans une direction parallèle au sixième axe O6.

Le croisillon de tangage 100 comprend donc deux pièces - les deux demi-coquilles 105.1 et 105.2 d'une part et le deuxième noyau 107 d'autre part - qui sont agencées pour porter toutes deux le neuvième palier 117 de manière à maintenir le neuvième palier 117 en position indépendamment de la rupture des demi-coquilles 105.1 et 105.2 ou du deuxième noyau 107.

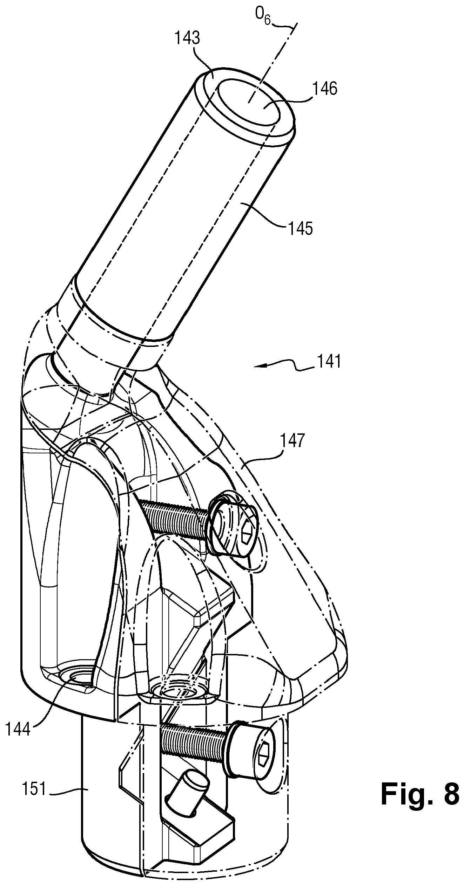

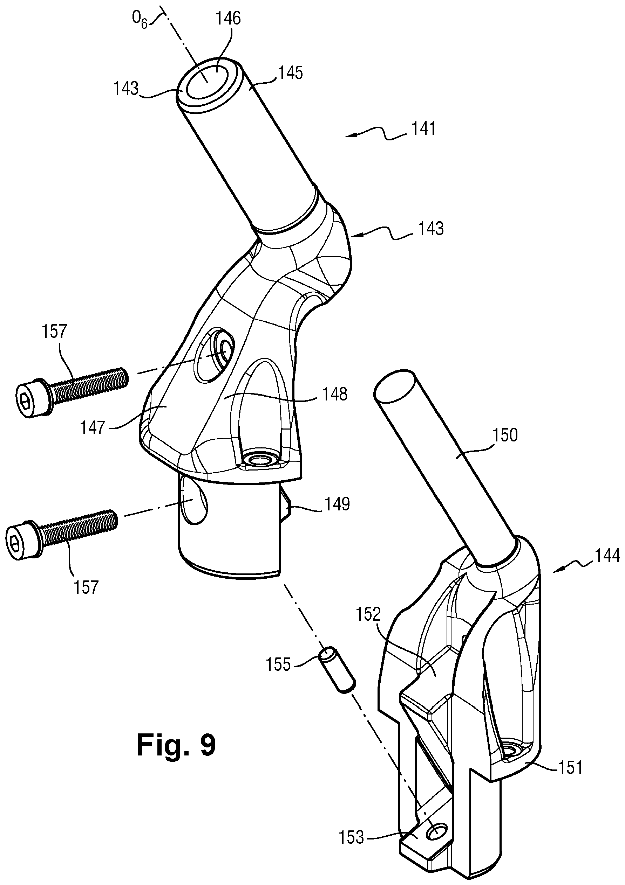

En référence aux figures 8 et 9, l'arbre de tangage 141 comprend deux pièces d'éléments mâle, à savoir une neuvième pièce d'élément mâle 143 et une dixième pièce d'élément mâle 144.

La neuvième pièce d'élément mâle 143 comprend une portion cylindrique 145 à l'intérieur de laquelle un alésage 146 s'étend selon une direction sensiblement parallèle au sixième axe O6. La neuvième pièce d'élément mâle 143 comprend également un premier socle 147 pourvu d'une première languette 148 et d'une deuxième languette 149. La dixième pièce d'élément mâle 144 comprend une portion cylindrique 150 qui est engagée dans l'alésage 146. La dixième pièce d'élément mâle 144 comprend également un deuxième socle 151 pourvu d'une première rainure 152 qui accueille la première languette 148 et d'une deuxième rainure 153 qui accueille la deuxième languette 149. La neuvième pièce d'élément mâle 143 et la dixième pièce d'élément mâle 144 sont reliées l'une à l'autre par une vis 154 et un pion de cisaillement 155.

L'arbre de tangage 141 est engagé dans le neuvième palier 117 du croisillon de tangage 100.

Ainsi, l'arbre de tangage 141 comprend deux pièces, la neuvième pièce d'élément mâle 143 et la dixième pièce d'élément mâle 144, qui sont agencées pour porter toutes deux le neuvième palier 117 de manière à maintenir le neuvième palier 117 en position indépendamment de la rupture de la neuvième pièce d'élément mâle 143 ou de la dixième pièce d'élément mâle 144. Le neuvième palier 117 agit comme un cerclage autour de l'arbre de tangage 141 et contribue ainsi à assurer la liaison entre la neuvième pièce d'élément mâle 143 et la dixième pièce d'élément mâle 144.

L'arbre de tangage 141 et le neuvième palier 117 définissent le sixième dispositif de liaison en rotation 142.

Plus précisément, l'arbre de tangage 141 définit un élément mâle du sixième dispositif de liaison en rotation 142. Le cinquième logement 116 du croisillon de tangage 100 définit un élément femelle du sixième dispositif de liaison en rotation 142.

Le croisillon de roulis 80 est identique au croisillon de tangage 100 et l'arbre de roulis 121 est identique à l'arbre de tangage 141.
Ainsi, le troisième dispositif de liaison en rotation 81 qui relie le cadre 20 au croisillon de roulis 80 comprend un quatrième palier 27 qui est porté par le premier demi-cadre 20.1 et par le deuxième demi-cadre 20.2. Le troisième dispositif de liaison en rotation 81 comprend également deux pièces d'éléments mâle, à savoir une onzième pièce d'élément mâle 83 et une douzième pièce d'élément mâle 84, respectivement identiques à la cinquième pièce d'élément mâle 103 et à la sixième pièce d'élément mâle 104, et qui constituent un cinquième arbre 82. Enfin, le troisième dispositif de liaison en rotation 81 comprend deux autres pièces d'éléments mâle, à savoir une treizième pièce d'élément mâle 93 et une quatorzième pièce d'élément mâle 94 respectivement identiques à la septième pièce d'élément mâle 113 et à la huitième pièce d'élément mâle 114 et qui constituent un sixième arbre 92.
Le cinquième dispositif de liaison en rotation 122 qui relie le croisillon de roulis 80 à l'arbre de roulis 121 comprend un dixième palier 97 qui est porté par le troisième noyau 87 du croisillon de roulis 80 et dans lequel est engagé l'arbre de roulis 121. Le cinquième dispositif de liaison en rotation 122 comprend également deux pièces d'éléments mâle, à savoir une quinzième pièce d'élément mâle 123 et une seizième pièce d'élément mâle 130 respectivement identiques à la neuvième pièce d'élément mâle 143 et à la dixième pièce d'élément mâle 144.

### LIAISON CHASSIS CADRE

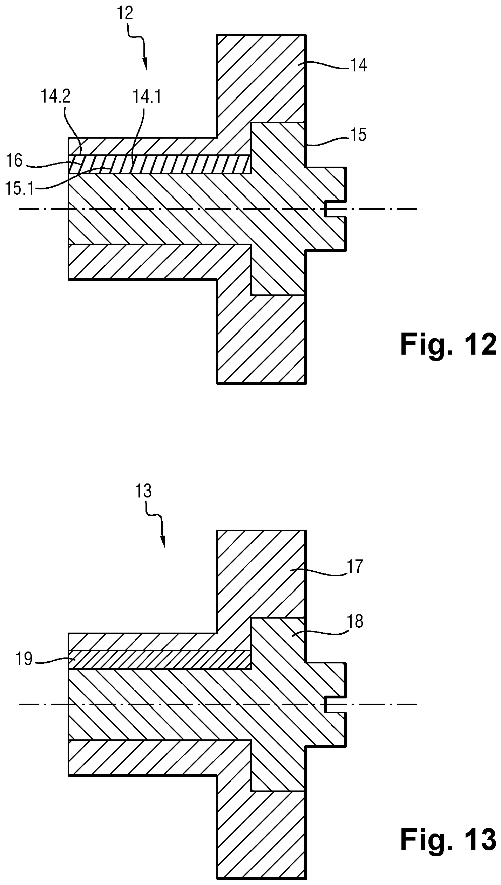

En référence aux figures 1, 2 et 12, un élément mâle -ici un septième arbre 12- coopère avec le deuxième palier 24. De manière homologue, un autre élément mâle - ici un huitième arbre 13- coopère avec le premier palier 23.

Le septième arbre 12 comprend une dix-septième pièce d'élément mâle 14 de révolution qui comprend une troisième lumière 14.1 axiale s'étendant selon le premier axe O1. Une troisième rainure axiale 14.2 débouche dans la troisième lumière 14.1. Une dix-huitième pièce d'élément mâle 15 s'étend dans la troisième lumière 14.1 et comprend une quatrième rainure axiale 15.1 d'accueil d'une première clavette 16. Le huitième arbre 13 comprend, de manière homologue, une dix-neuvième pièce d'élément mâle 17 qui accueille une vingtième pièce d'élément mâle 18 reliées par une deuxième clavette 19.

Le septième arbre 12 et le huitième arbre 13 définissent un élément mâle du premier dispositif de liaison en rotation 11. Le logement d'accueil du premier palier 23 et le logement d'accueil du deuxième palier 24 du cadre 20 définissent un élément femelle du premier dispositif de liaison en rotation 11.

L'ensemble des pièces décrites ci-dessus peuvent être avantageusement réalisées par fabrication additive.

Bien entendu, l'invention n'est pas limitée au mode de réalisation décrit mais englobe toute variante entrant dans le champ de l'invention telle que définie par les revendications.

En particulier,
- bien qu'ici le premier secteur et le deuxième secteur soient égaux et couvrent à eux deux trois cent soixante degrés, l'invention s'applique également à d'autres valeurs de secteurs inferieures ou supérieures à cent-quatre-vingt degrés et qui peuvent ne pas être égales ;
- bien qu'ici la fixation des oreilles des paliers se fasse à l'aide de vis, l'invention s'applique également à d'autres premiers et deuxièmes moyens de fixation des oreilles au cadre comme par exemple le collage, le soudage, le boulonnage ou le rivetage ;
- bien qu'ici le logement interne soit de forme cubique, l'invention s'applique également à d'autres types de logement comme par exemple un logement parallélépipédique, pyramidale ou quelconque ;
- bien qu'ici l'invention comprenne des roulements à billes ou à rouleaux, l'invention s'applique également à d'autres types de paliers de guidage en rotation comme par exemple des paliers lisses, en bronze auto lubrifié ou non, des douilles synthétiques, des bagues ou des roulements à aiguilles.

## Revendications

1. Dispositif de liaison en rotation (11, 41, 81 , 101, 122, 142), comprenant un élément femelle (20, 40, 80, 100) et un élément mâle (12, 40, 80, 121, 141) monté dans l'élément femelle (20, 40, 80, 100) à rotation autour d'un premier axe (O1, O2, O3, O4, O5, O6) via un palier (23, 24, 26, 27, 29, 30, 61, 68, 97, 117) de guidage en rotation, **caractérisé en ce que** chaque élément (20, 40, 60, 80, 100, 121, 141) comprend deux pièces (20.1, 20.2, 45, 46, 47.1, 47.2, 49, 56, 57, 83, 84, 87, 93, 94, 103, 104, 105.1, 105.2, 107, 113, 114, 143, 144, 123, 124, 130) agencées pour porter toutes deux le palier de manière à maintenir le palier (23, 24, 26, 27, 29, 30, 61, 68, 97, 117) en position indépendamment d'une rupture de l'une des pièces (45, 46, 56, 57, 83, 84, 93, 94, 103, 104, 113, 114, 143, 144, 123, 124, 130) du même élément.

2. Dispositif (11, 41, 81, 101, 122, 142) selon la revendication 1, dans lequel l'élément femelle (20, 40, 80, 100) comprend une première pièce d'élément femelle (20.1) et une deuxième pièce d'élément femelle (20.2), et le palier (23, 24, 26, 27, 29, 30) comprend des premiers moyens de fixation à la première pièce d'élément femelle (20.1) et des deuxièmes moyens de fixation à la deuxième pièce d'élément femelle (20.2).

3. Dispositif (11, 41) selon la revendication 2, dans lequel les premiers moyens de fixation et/ou les deuxièmes moyens de fixation comprennent une oreille (32, 33) venant en saillie d'une surface externe du palier (23, 24, 26, 27, 29, 30).

4. Dispositif (11, 41) selon la revendication 3, dans lequel l'oreille (32, 33) comprend au moins un perçage.

5. Dispositif (11, 41) selon l'une quelconque des revendication 2 à 4, dans lequel l'élément femelle (20) comprend un premier logement (31) d'accueil du palier (23, 24, 26, 27, 29, 30) de guidage, défini conjointement par la première pièce d'élément femelle (20.1) et par la deuxième pièce d'élément femelle (20.2), la première pièce d'élément femelle (20.1) définissant un premier secteur (31.1) du premier logement (31) centré autour du premier axe (O1, O2, O3) et la deuxième pièce d'élément femelle (20.2) définissant un deuxième secteur (31.2) du premier logement (31) centré autour du premier axe.

6. Dispositif (11, 41) selon la revendication 5, dans lequel le premier secteur (31.1) a une première amplitude sensiblement égale à cent quatre-vingt degrés et le deuxième secteur (31.2) a une deuxième amplitude sensiblement égale à cent quatre-vingt degrés.

7. Dispositif (81, 101, 122, 142) selon la revendication 1, dans lequel l'élément femelle (47.1, 49, *87, 105.1, 107)* comprend un premier logement (60) d'accueil du palier (23, 24, 26, 27, 29, 30) de guidage défini conjointement par une première pièce d'élément femelle (47.1, 47.2) définissant une première portion de premier logement (60) et par une deuxième pièce d'élément femelle (49) définissant une deuxième portion de premier logement (60), la première portion (66) de premier logement (60) et la deuxième portion (64) de premier logement (60) s'étendant de part et d'autre d'un premier plan (P4) orthogonal au premier axe (O4).

8. Dispositif (81, 101) selon la revendication 7, dans lequel la deuxième pièce d'élément femelle comprend une première demi-coquille (47.1) et une deuxième demi-coquille (47.2) assemblées l'une à l'autre.

9. Dispositif (81, 101, 122, 142) selon la revendication 1, dans lequel l'élément femelle (100) comprend une première pièce d'élément femelle (107) définissant un premier logement (117) d'accueil du palier et une deuxième pièce d'élément femelle (105.1, 105.2) définissant un deuxième logement (106) d'accueil de la première pièce d'élément femelle (107).

10. Dispositif (41, 81, 101, 122, 142) selon la revendication 9, dans lequel la deuxième pièce d'élément femelle comprend une première demi-coquille (105.1) et une deuxième demi-coquille (105.2) assemblées l'une à l'autre autour de la première pièce d'élément femelle (107).

11. Dispositif (41, 81, 101, 122, 142) selon l'une quelconque des revendications précédentes, dans lequel l'élément mâle comprend une première pièce d'élément mâle (45, 55, 110, 112, 145) et une deuxième pièce d'élément mâle (46, 58, 111, 114), pourvues de troisièmes moyens de leur liaison en rotation autour du premier axe (O2, O4, O6).

12. Dispositif (11, 41, 81, 101, 122, 142) selon la revendication 11, dans lequel la première pièce d'élément mâle (45, 55, 110, 112, 145) comprend une première lumière (52, 54, 110, 146) au travers de laquelle s'étend au moins partiellement la deuxième pièce d'élément mâle (46, 58, 111, 114).

13. Dispositif *(11, 41, 81, 101, 122, 142)* selon la revendication 12 dans lequel la première pièce d'élément mâle et la deuxième pièce d'élément mâle (46, 58, 111, 114) sont toutes deux en contact avec le palier (26, 27, 29, 30) .

14. Dispositif (11, 41, 81, 101, 122, 142) selon la revendication 12 ou 13, dans lequel la première lumière (52, 110, 146) s'étend selon une direction sensiblement parallèle au premier axe (O2, O4, O6).

15. Dispositif (11, 41, 81, 101, 122, 142) selon la revendication 14, dans lequel la première pièce d'élément mâle (55) comprend également une deuxième lumière (54) qui s'étend selon une direction sensiblement orthogonale au premier axe (O2, O4, O6) et au travers de laquelle s'étend au moins partiellement la deuxième pièce d'élément mâle (53).

16. Dispositif (41, 81, 101, 122, 142) selon l'une quelconque des revendications précédentes, dans lequel l'élément mâle comprend un deuxième dispositif de liaison en rotation (41, 81, 101) autour d'un deuxième axe.

17. Dispositif (81, 101, 122, 142) selon la revendication 16, dans lequel le deuxième dispositif (41, 81, 101) de liaison en rotation autour d'un deuxième axe est conforme à l'une quelconque des revendications 1 à 14.

18. Dispositif de commande de vol (1) d'un aéronef comprenant :
- un bâti (10),
- un cadre (20) monté à rotation relativement au bâti autour d'un premier axe (O1) à l'aide d'un premier dispositif de liaison en rotation selon la revendication 12;
- un bras de commande (40) destiné à être relié à une interface de manipulation manuelle (42) et monté à rotation sur le cadre (20) à l'aide d'un deuxième dispositif de liaison (41) selon la revendication 17 ;
- un croisillon de roulis (80) monté à rotation sur le cadre (20) à l'aide d'un troisième dispositif de liaison (81) selon la revendication 17 ;
- un croisillon de tangage (100) monté à rotation sur le bras de commande (40) à l'aide d'un quatrième dispositif de liaison (101) selon la revendication 17 ;
- un moteur de roulis (120) fixe par rapport au cadre (20) et qui comprend un arbre de roulis (121) monté à rotation sur le croisillon de roulis (80) à l'aide d'un cinquième dispositif de liaison (122) selon l'une quelconque des revendications 9 ou 10.
- un moteur de tangage (140) fixe par rapport au cadre (20) et qui comprend un arbre de tangage (141) monté à rotation sur le croisillon de tangage (100) à l'aide d'un sixième dispositif de liaison (142) selon l'une quelconque des revendications 9 ou 10.

## Patentansprüche

1. Rotationsverbindungsvorrichtung (11, 41, 81, 101, 122, 142), umfassend ein weibliches Element (20, 40, 80, 100) und ein männliches Element (12, 40, 80, 121, 141), das in dem weiblichen Element (20, 40, 80, 100) drehbar um eine erste Achse (O1, O2, O3, O4, O5, O6) über ein Führungslager (23, 24, 26, 27, 29, 30, 61, 68, 97, 117) zur Rotationsführung gelagert ist, **dadurch gekennzeichnet, dass** jedes Element (20, 40, 60, 80, 100, 121, 141) zwei Teile (20.1, 20.2, 45, 46, 47.1, 47.2, 49, 56, 57, 83, 84, 87, 93, 94, 103, 104, 105.1, 105.2, 107, 113, 114, 143, 144, 123, 124, 130) umfasst, die ausgebildet sind, alle beide das Lager so zu tragen, dass das Lager (23, 24, 26, 27, 29, 30, 61, 68, 97, 117) in Position gehalten wird, unabhängig von einem Bruch eines der Teile (45, 46, 56, 57, 83, 84, 93, 94, 103, 104, 113, 114, 143, 144, 123, 124, 130) desselben Elements.

2. Vorrichtung (11, 41, 81, 101, 122, 142) nach Anspruch 1, bei der das weibliche Element (20, 40, 80, 100) ein erstes Teil (20.1) des weiblichen Elements und ein zweites Teil (20.2) des weiblichen Elements umfasst, und das Lager (23, 24, 26, 27, 29, 30) erste Befestigungsmittel zur Befestigung am ersten Teil (20.1) des weiblichen Elements und zweite Befestigungsmittel zur Befestigung am zweiten Teil (20.2) des weiblichen Elements umfasst.

3. Vorrichtung (11, 41) nach Anspruch 2, bei dem die ersten Befestigungsmittel und/oder die zweiten Befestigungsmittel ein Auge (32, 33) umfassen, das von einer Außenfläche des Lagers (23, 24, 26, 27, 29, 30) vorsteht.

4. Vorrichtung (11, 41) nach Anspruch 3, bei der das Auge (32, 33) mindestens eine Bohrung aufweist.

5. Vorrichtung (11, 41) nach einem der Ansprüche 2 bis 4, bei der das weibliche Element (20) eine erste Aufnahme (31) zur Aufnahme des Führungslagers (23, 24, 26, 27, 29, 30) umfasst, gemeinsam definiert von dem ersten Teil (20.1) des weiblichen Elements und von dem zweiten Teil (20.2) des weiblichen Elements, wobei das erste Teil (20.1) des weiblichen Elements einen ersten Sektor (31.1) der ersten Aufnahme (31) definiert, der um die erste Achse (O1, O2, O3) zentriert ist, und das zweite Teil (20.2) des weiblichen Elements einen zweiten Sektor (31.2) der ersten Aufnahme (31) definiert, der um die erste Achse zentriert ist.

6. Vorrichtung (11, 41) nach Anspruch 5, bei der der erste Sektor (31.1) eine erste Amplitude hat, die im Wesentlichen gleich hundertachtzig Grad ist und der zweite Sektor (31.2) eine zweite Amplitude hat, die im Wesentlichen gleich hundertachtzig Grad ist.

7. Vorrichtung (81, 101, 122, 142) nach Anspruch 1, bei der das weibliche Element (*47.1, 49, 87, 105.1, 107*) eine erste Aufnahme (60) zur Aufnahme des Führungslagers (23, 24, 26, 27, 29, 30) umfasst, gemeinsam definiert von einem ersten Teil (*47.1, 47.2*) des weiblichen Elements, das einen ersten Abschnitt der ersten Aufnahme (60) definiert, und von einem zweiten Teil (49) des weiblichen Elements, das einen zweiten Abschnitt der ersten Aufnahme (60) definiert, wobei sich der erste Abschnitt (66) der ersten Aufnahme (60) und der zweite Abschnitt (64) der ersten Aufnahme (60) zu beiden Seiten einer ersten Ebene (P4) erstrecken, die orthogonal zur ersten Achse (O4) ist.

8. Vorrichtung (81, 101) nach Anspruch 7, bei der das zweite Teil des weiblichen Elements eine erste Halbschale (47.1) und eine zweite Halbschale (47.2) umfasst, die aneinander befestigt sind.

9. Vorrichtung (81, 101, 122, 142) nach Anspruch 1, bei der das weibliche Element (100) ein erstes Teil (107) des weiblichen Elements umfasst, das eine erste Aufnahme (117) zur Aufnahme des Lagers definiert, und ein zweites Teil (105.1, 105.2) des weiblichen Elements, das eine zweite Aufnahme (106) zur Aufnahme des ersten Teils (107) des weiblichen Elements definiert.

10. Vorrichtung (41, 81, 101, 122, 142) nach Anspruch 9, bei der das zweite Teil des weiblichen Elements eine erste Halbschale (105.1) und eine zweite Halbschale (105.2) umfasst, die um das erste Teil (107) des weiblichen Elements herum aneinander befestigt sind.

11. Vorrichtung (41, 81, 101, 122, 142) nach einem der vorhergehenden Ansprüche, bei der das männliche Element ein erstes Teil (45, 55, 110, 112, 145) des männlichen Elements und ein zweites Teil (46, 58, 111, 114) des männlichen Elements umfasst, die mit dritten Mitteln für ihre Rotationsverbindung um die erste Achse (O2, O4, O6) versehen sind.

12. Vorrichtung (11, 41, 81, 101, 122, 142) nach Anspruch 11, bei der das erste Teil (45, 55, 110, 112, 145) des männlichen Elements ein erstes Schlitzloch (52, 54, 110, 146) umfasst, durch das sich das zweite Teil (46, 58, 111, 114) des männlichen Elements zumindest teilweise erstreckt.

13. Vorrichtung (*11, 41, 81, 101, 122, 142*) nach Anspruch 12, bei der das erste Teil des männlichen Elements und das zweite Teil (46, 58, 111, 114) des männlichen Elements alle beide in Kontakt mit dem Lager (26, 27, 29, 30) sind.

14. Vorrichtung (11, 41, 81, 101, 122, 142) nach Anspruch 12 oder 13, bei der sich das erste Schlitzloch (52, 110, 146) in einer Richtung erstreckt, die im Wesentlichen parallel zur ersten Achse (O2, O4, O6) ist.

15. Vorrichtung (11, 41, 81, 101, 122, 142) nach Anspruch 14, bei der das erste Teil (55) des männlichen Elements ferner ein zweites Schlitzloch (54) umfasst, das sich in einer Richtung erstreckt, die im Wesentlichen orthogonal zur ersten Achse (O2, O4, O6) ist, und durch das sich das zweite Teil (53) des männlichen Elements zumindest teilweise erstreckt.

16. Vorrichtung (41, 81, 101, 122, 142) nach einem der vorhergehenden Ansprüche, bei der das männliche Element eine zweite Rotationsverbindungsvorrichtung (41, 81, 101) zur Rotation um eine zweite Achse umfasst.

17. Vorrichtung (81, 101, 122, 142) nach Anspruch 16, bei der die zweite Rotationsverbindungsvorrichtung (41, 81, 101) zur Rotation um eine zweite Achse nach einem der Ansprüche 1 bis 14 ausgebildet ist.

18. Vorrichtung (1) zur Flugsteuerung eines Luftfahrzeugs, umfassend:
- ein Gestell (10),
- einen Rahmen (20), der relativ zum Gestell um eine erste Achse (O1) mit Hilfe einer ersten Rotationsverbindungsvorrichtung nach Anspruch 12 drehbar gelagert ist;
- einen Steuerarm (40), der dazu bestimmt ist, mit einer Schnittstelle (42) zur manuellen Handhabung verbunden zu werden und mit Hilfe einer zweiten Verbindungsvorrichtung (41) nach Anspruch 17 drehbar an dem Rahmen (20) gelagert zu werden;
- ein Roll-Kreuzstück (80), das an dem Rahmen (20) mit Hilfe einer dritten Verbindungsvorrichtung (81) nach Anspruch 17 drehbar gelagert ist;
- Nick-Kreuzstück (100), das an dem Steuerarm (40) mit Hilfe einer vierten Verbindungsvorrichtung (101) nach Anspruch 17 drehbar gelagert ist;
- einen Roll-Motor (120), der in Bezug auf den Rahmen (20) ortsfest ist und eine Roll-Welle (121) umfasst, die an dem Roll-Kreuzstück (80) mit Hilfe einer fünften Verbindungsvorrichtung (122) nach einem der Ansprüche 9 oder 10 drehbar gelagert ist,
- einen Nick-Motor (140), der in Bezug auf den Rahmen (20) ortsfest ist und eine Nick-Welle (141) umfasst, die an dem Nick-Kreuzstück (100) mit Hilfe einer sechsten Verbindungsvorrichtung (142) nach einem der Ansprüche 9 oder 10 drehbar gelagert ist.

## Claims

1. A rotary connection device (11, 41, 81, 101, 122, 142) comprising a female element (20, 40, 80, 100) and a male element (12, 40, 80, 121, 141) mounted in the female element (20, 40, 80, 100) to be rotatable about a first axis (O₁, O₂, O₃, O₄, O₅, O₆) via a guide bearing (23, 24, 26, 27, 29, 30, 61, 68, 97, 117) for providing rotary guidance, the device being **characterized in that** each element (20, 40, 60, 80, 100, 121, 141) comprises two parts (20.1, 20.2, 45, 46, 47.1, 47.2, 49, 56, 57, 83, 84, 87, 93, 94, 103, 104, 105.1, 105.2, 107, 113, 114, 143, 144, 123, 124, 130), both of which are arranged to carry the bearing in such a manner as to hold the bearing (23, 24, 26, 27, 29, 30, 61, 68, 97, 117) in position independently of either one of the parts (45, 46, 56, 57, 83, 84, 93, 94, 103, 104, 113, 114, 143, 144, 123, 124, 130) of the same element breaking.

2. A device (11, 41, 81, 101, 122, 142) according to claim 1, wherein the female element (20, 40, 80, 100) comprises both a first female element part (20.1) and a second female element part (20.2), and the bearing (23, 24, 26, 27, 29, 30) includes first fastener means for fastening to the first female element part (20.1) and second fastener means for fastening to the second female element part (20.2).

3. A device (11, 41) according to claim 2, wherein the first and/or second fastener means comprise a lug (32, 33) projecting from an outer surface of the bearing (23, 24, 26, 27, 29, 30) .

4. A device (11, 41) according to claim 3, wherein the lug (32, 33) includes at least one hole.

5. A device (11, 41) according to any one of claims 2 to 4, wherein the female element (20) includes a first housing (31) for receiving the guide bearing (23, 24, 26, 27, 29, 30) and defined jointly by the first female element part (20.1) and by the second female element part (20.2), the first female element part (20.1) defining a first sector (31.1) of the first housing (31) centered about the first axis (O₁, O₂, O₃) and the second female element part (20.2) defining a second sector (31.2) of the first housing (31) centered about the first axis.

6. A device (11, 41) according to claim 5, wherein the first sector (31.1) has a first amplitude substantially equal to one hundred eighty degrees, and the second sector (31.2) has a second amplitude substantially equal to one hundred eighty degrees.

7. A device (81, 101, 122, 142) according to claim 1, wherein the female element *(47.1, 49, 87, 105.1, 107)* includes a first housing (60) for receiving the guide bearing (23, 24, 26, 27, 29, 30) and defined jointly by a first female element part *(47.1, 47.2)* defining a first portion of the first housing (60) and by a second female element part (49) defining a second portion of the first housing (60), the first and second portions (66; 64) of the first housing (60) extending on opposite sides of a first plane (P₄) orthogonal to the first axis (O₄).

8. A device (81, 101) according to claim 7, wherein the second female element part comprises first and second half-shells (47.1; 47.2) that are assembled to each other.

9. A device (81, 101, 122, 142) according to claim 1, wherein the female element (100) comprises a first female element part (107) defining a first housing (117) for receiving the bearing and a second female element part (105.1, 105.2) defining a second housing (106) for receiving the first female element part (107).

10. A device (41, 81, 101, 122, 142) according to claim 9, wherein the second female element part comprises first and second half-shells (105.1; 105.2) that are assembled to each other about the first female element part (107).

11. A device (41, 81, 101, 122, 142) according to any preceding claim, wherein the male element comprises first and second male element parts (45, 55, 110, 112, 145; 46, 58, 111, 114) provided with third means for rotatably connecting them to turn about the first axis (O₂, O₄, O₆).

12. A device (11, 41, 81, 101, 122, 142) according to claim 11, wherein the first male element part (45, 55, 110, 112, 145) includes a first opening (52, 54, 110, 146) through which the second male element part (46, 58, 111, 114) extends, at least partially.

13. A device *(11, 41, 81, 101, 122, 142)* according to claim 12 wherein the first male element part and the second male element part (46, 58, 111, 114) are both in contact with the bearing (26, 27, 29, 30).

14. A device (11, 41, 81, 101, 122, 142) according to claim 12 or claim 13, wherein the first opening (52, 110, 146) extends along a direction substantially parallel to the first axis (O₂, O₄, O₆).

15. A device (11, 41, 81, 101, 122, 142) according to claim 14, wherein the first male element part (55) also includes a second opening (54) that extends along a direction substantially orthogonal to the first axis (O₂, O₄, O₆) and through which the second male element part (53) extends, at least partially.

16. A device (41, 81, 101, 122, 142) according to any preceding claim, wherein the male element includes a second connection device (41, 81, 101) for rotary connection to turn about a second axis.

17. A device (81, 101, 122, 142) according to claim 16, wherein the second device (41, 81, 101) for rotary connection to turn about a second axis is according to any one of claims 1 to 14.

18. An aircraft flight control device (1) comprising:
· a stand (10);
· a frame (20) rotatably mounted relative to the stand to turn about a first axis (O₁) by means of a first rotary connection device according to claim 12;
· a control arm (40) for connecting to a manual handling interface (42) and rotatably mounted on the frame (20) by means of a second connection device (41) according to claim 17;
· a roll spider (80) rotatably mounted on the frame (20) by means of a third rotary connection device (81) according to claim 17;
· a pitch spider (100) rotatably mounted on the control arm (40) by means of a fourth connection device (101) according to claim 17;
· a roll motor (120) that is stationary relative to the frame (20) and that includes a roll pin (121) rotatably mounted on the roll spider (80) by means of a fifth connection device (122) according to claim 9 or claim 10; and
· a pitch motor (140) that is stationary relative to the frame (20) and that includes a pitch pin (141) rotatably mounted on the pitch spider (100) by means of a sixth connection device (142) according to claim 9 or claim 10.
